(19) Europäisches Patentamt
European Patent Office
Office européen des brevets

(11) Numéro de publication: **0 295 982 B1**

# (12) FASCICULE DE BREVET EUROPEEN

(45) Date de publication de fascicule du brevet: **02.11.94**

(51) Int. Cl.5: **C08G 81/02**

(21) Numéro de dépôt: **88401258.4**

(22) Date de dépôt: **24.05.88**

Demande divisionnaire 94101793.1 déposée le 24/05/88.

## (54) Agent de compatibilisation et son application à la fabrication d'alliages de polymères thermoplastiques.

(30) Priorité: **04.06.87 FR 8707800**

(43) Date de publication de la demande:
**21.12.88 Bulletin 88/51**

(45) Mention de la délivrance du brevet:
**02.11.94 Bulletin 94/44**

(84) Etats contractants désignés:
**AT BE DE FR GB IT NL SE**

(56) Documents cités:
**GB-A- 785 983**
**US-A- 3 906 057**
**US-A- 4 319 003**

**CHEMICAL ABSTRACTS, vol. 104, no. 26, 30 juin 1986, page 7, résumé no. 225316y,Columbus, Ohio, US; Y. PIETRASANTA et al.: "Synthesis of ABA block co-oligomersof poly(methylmethacrylate) and poly(dimethylsiloxane)"**

**PATENT ABSTRACTS OF JAPAN, vol. 4, no. 155 (C-29)[637], 29 octobre 1980, page25 C 29; & JP-A-55 99 924**

(73) Titulaire: **ELF ATOCHEM S.A.**
**4 & 8, Cours Michelet**
**La Défense 10**
**F-92800 Puteaux (FR)**

(72) Inventeur: **Parsy, Roland**
**Rue de Beaumesnil**
**F-27170 Beaumont le Roger (FR)**
Inventeur: **Rivas, Nadine**
**Rue des Jonquilles**
**Cédex 2807**
**F-27670 St. Ouen du Tilleul (FR)**

(74) Mandataire: **Foiret, Claude et al**
**ELF ATOCHEM S.A.**
**Département Propriété Industrielle**
**La Défense 10 - Cedex 42**
**F-92091 Paris-La-Défense (FR)**

EP 0 295 982 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un agent permettant de rendre compatible au moins deux polymères thermoplastiques incompatibles. Il s'agit de copolymères di ou triséquencés constitués d'au moins un télomère de N-vinylpyrrolidone ou de (méth)acrylate de méthyle et d'un oligomère mono ou difonctionnel d'un monomère polymérisable éthyléniquement insatureé.

L'invention concerne également le procédé de fabrication de cet agent de compatibilité. Il est obtenu par condensation de préférence à l'état fondu de télomère monofonctionnel de N-vinylpyrrolidone ou d'acrylate de méthyle ou encore de méthacrylate de méthyle avec un oligomère mono ou difonctionnel de monomère éthyléniquement insaturé, éventuellement hydrogéné.

L'invention concerne également l'application consistant à associer l'agent de compatibilité à au moins deux polymères thermoplastiques incompatibles mais dont au moins un est compatible avec le télomère et au moins un est compatible avec l'oligomère.

L'invention concerne enfin les différents alliages de polymères thermoplastiques rendu compatibles en mélange par association avec l'agent de compatibilité.

On connaît des copolymères polyséquencés constitués de séquences issues de la polymérisation de monomères éthyléniquement insaturés Dans GB-A-785 983, on décrit des polymères di- ou triséquencés obtenus par réaction entre des polymères intermédiaires dont une extrémité, voire les deux porte(nt) un groupement fonctionnel et une molécule de couplage possédant nu moins des groupements capables de réagir avec les groupements fonctionnels des polymères précités.

Il est connu de rendre compatibles, dans certains types de mélanges spécifiques, deux polymères incompatibles en leur associant un tiers polymère, éventuellement séquencé ou greffé, partiellement compatible avec l'un et l'autre des polymères. C'est par exemple le cas du mélange polyéthylène-polystyrène rendus compatibles par un polymère séquencé styrène-butadiène hydrogéné.

L'inconvénient de cette technique est de ne pas révéler de produits permettant de rendre systématiquement compatibles deux polymères incompatibles. C'est ainsi par exemple, que l'on ne sait toujours pas rendre efficacement compatibles les couples : , polyéthylène-polyfluorés, résines styréniques-polyfluoré. Pour associer de tels couples, il a pu être envisagé de leur incorporer en mélange un tiers polymère en quantité telle qu'on ne puisse plus parler d'agent de compatibilité mais de véritable mélange tricomposant.

Pour l'homme de métier l'agent de compatibilité ne sert qu'à modifier les propriétés interfaciales dans deux phases constituées par les deux polymères à rendre compatibles sans constituer par lui-même une troisième phase. C'est pour cette raison que les agents de compatibilité efficaces ne sont utilisés qu'à de faibles doses dans les mélanges de polymères à rendre compatibles, généralement en quantité inférieure à 5 % en poids de mélange.

L'agent de compatibilité selon l'invention est caractérisé par la formule générale :

$$H \leftarrow CH_2 - \underset{R_2}{\overset{R_1}{C}} \rightarrow_a X - Y \leftarrow M \rightarrow_b A$$

dans laquelle

$R_1$ est l'hydrogène ou le groupement méthyle

$R_2$ est le groupement

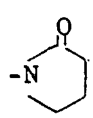 ou $-\overset{O}{\overset{||}{C}}-O-CH_3$

M est un motif monomérique issu d'un monomère éthyléniquement insaturé,

a et b sont des nombres identiques ou différents compris entre 2 et 1000 et mieux entre 10 et 50

avec A qui est

(1) soit

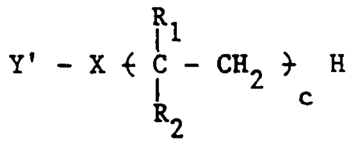

c étant un nombre compris entre 2 et 1000 et mieux entre 10 et 50
et dans ce cas :
Y et Y' représentent les restes fonctionnels d'un agent de polymérisation difonctionnel
-X- est choisi parmi les groupements : -R-O-,

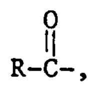

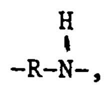

étant entendu que les groupements X et Y, ou X et Y', ou X et $(M)_b$ sont liés entre eux par une fonction ester ou amide, R étant le reste d'un agent de transfert monofonctionnel
(2) soit le reste non fonctionnel d'un agent monofonctionnel de polymérisation et dans ce cas :
Y est le reste de la partie fonctionnelle de l'agent monofonctionnel dont la fonction est choisie parmi :

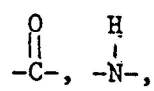

-O-, -X- est choisi parmi les groupements : -R-O-,

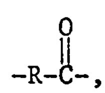

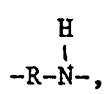

étant entendu que les groupements X et Y sont liés entre eux par une fonction ester ou amide, R étant le reste d'un agent monofonctionnel de transfert.

Comme il est possible de s'en rendre compte dans la formule générale précédente l'agent de compatibilité est un copolymère di ou triséquencé. Ces copolymères di ou triséquencés sont obtenus par condensation (A) d'un télomère monofonctionnel avec (B) un oligomère mono ou difonctionnel. Cette condensation s'effectue par formation d'une liaison ester ou amide entre le télomère et l'oligomère.

Le télomère monofonctionnel (A) entrant dans la fabrication de l'agent de compatibilité correspond à la formule générale :

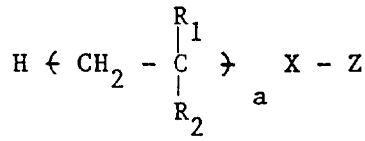

dans laquelle

$R_1$, $R_2$, a et X sont tels que définis précédemment

avec Z = hydrogène si -X- est -R-O- ou

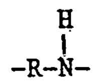

ou Z : OH si -X- est

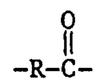

Ce télomère est obtenu par polymérisation, en présence (A2) d'un agent de transfert monofonctionnel et (A1) de N-vinylpyrrolidone ou de (méth)acrylate de méthyle. Cette polymérisation, effectuée de façon connue, consiste à amorcer thermiquement par un agent de polymérisation non fonctionnel dans le sens de la polycondensation, en milieu solvant non réactif sous agitation et atmosphère inerte, la croissance de chaines polymères qui se désactivent sur l'agent de transfert monofonctionnel. La température de réaction, dépendant de la cinétique de décomposition de l'agent de polymérisation peut varier de 60 à 110 ° C.

Cette polymérisation conduisant à la fabrication du télomère peut également être amorcée par rayonnement UV dans la mesure où l'agent de polymérisation est remplacé par un photoamorceur non fonctionnel dans le sens de la polycondensation.

L'agent de polymérisation est-habituellement choisi parmi les composés azo, peroxydiques ou leurs mélanges. Les plus usuels sont l'azobisisobutyronitrile et le peroxyde terbutylique.

L'agent de transfert monofonctionnel (A2) est de préférence choisi parmi les mercaptans monofonctionnels et plus particulièrement parmi le mercaptoéthanol, l'acide mercaptopropionique et l'acide thioglycolique.

Le degré de polymérisation du télomère est contrôlé par le rapport molaire initial du monomère à l'agent de transfert monofonctionnel. Ce degré de polymérisation est réglé par la loi connue

$$\mathrm{Ln}\left(1 - \frac{\alpha\, Mo}{To(\overline{DPn})}\right) = C_T \times \mathrm{Ln}\,(1 - \alpha)$$

$\alpha$ : taux de conversion du monomère ; l'évolution de ce taux peut être mesurée par chromatographie en phase gazeuse.

Mo et To sont respectivement les concentrations initiales en monomère et en agent de transfert monofonctionnel

$\overline{DPn}$ représente le degré moyen de polymérisation du télomère

$C_T$ est la constante de transfert à l'agent de transfert monofonctionnel. De nombreuses valeurs de constante de transfert sont regroupées dans "Polymer Handbook Second Edition p. III-92 Ed. J.BRANDRUP ; E.H. IMMEREUT". La valeur de cette constante peut être déterminée expérimentalement en appliquant l'équation précédente. C'est ainsi qu'a été définie la valeur de la constante de tranfert de la N-vinylpyrrolidone à l'acide mercaptopropionique : cette constante est voisine de 1. Connaissant la valeur de $C_T$, l'opérateur peut se fixer des concentrations initiales Mo, To et arrêter la télomérisation à un taux de conversion a donné de façon à obtenir des télomères de $\overline{DPn}$ désiré.

L'oligomère (B) monofonctionnel pouvant entrer dans la fabrication de l'agent de compatibilité correspond à la formule générale :

T - Y - $(M)_b$ - A

dans laquelle :

b est tel que défini précédemment

M est un motif issu d'un monomère éthyléniquement insaturé

A et Y sout tels que définis en (2) précédemment

T = H si Y porte la fonction :

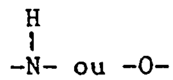

ou T = OH si Y porte la fonction :

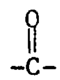

L'oligomère (B) difonctionnel pouvant entrer dans la fabrication de l'agent de compatibilité correspond à la formule générale :

T - Y $(M)_b$ - Y' - T'

dans laquelle

b est tel que défini précédemment

Y et Y' sont tels que définis précédemment en (1) avec

T = T' = OH si l'agent de polymérisation difonctionnel est un diacide

ou T = T' = H si l'agent de polymérisation difonctionnel est une diamine ou un diol

Les monomères polymérisables éthyléniquement insaturés (B1) dont peuvent être issus les motifs M correspondent à la formule générale :

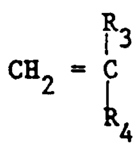

dans laquelle

$R_3$ est l'hydrogène ou le groupement méthyle

$R_4$ est :

soit un cycle aromatique à 6 carbones, éventuellement substitué par une ou plusieurs fonctions - $CH_3$, -Cl, -$CH_2$Cl, le monomère préféré étant le styrène soit un groupement hydrocarboné aliphatique de 1 à 10 carbones, linéaire ou ramifié, comportant éventuellement une ou plusieurs insaturations, le monomère préféré étant le butadiène.

De plus, les monomères polymérisables éthyléniquement insaturés doivent habituellement avoir un mode de terminaison en polymérisation radicalaire qui favorise les réactions de recombinaison par rapport aux réactions de dismutation.

Les agents monofonctionnels de polymérisation (B2.1) servant à réaliser, par polymérisation radicalaire, des oligomères préférenteiellement monofonctionnels de monomères éthyléniquement insaturés dont le mode de terminaison favorise la recombinaison. Ils sont introduits en mélange avec les monomères de départ dans un solvant de l'oligomère final. Les quantités introduites sont telles que le rapport molaire des monomères éthyléniquement insaturés sur l'agent monofonctionnel de polymérisation soit compris entre 2 et $10^3$ et mieux entre 10 et 50. Ils sont habituellement choisis parmi les composés de formule générale :

$R_8$ - E - $R_7$ - D

dans laquelle

E est une fonction pouvant se scinder homolytiquement, sous l'action de la chaleur, pour amorcer la formation de deux radicaux. Cette fonction est habituellement : azo, peroxyde ou percarbonate

D est un proton ou encore $NH_2$, OH, COCL, COOQ avec Q = H ou une chaine alkyle linéaire ou ramifiée, contenant de 1 à 4 carbones

$R_7$ est soit une chaine hydrocarbonée, linéaire ou ramifiée, comportant de 1 à 7 atomes de carbone pouvant contenir au moins un atome d'azote et/ou d'oxygène soit égal à zéro. Il est entendu qu'après scission homolytique de l'agent monofonctionnel, le radical qui comporte le fragment ($R_7$-D) est fonctionnel dans le sens de la polycondensation.

$R_8$ est une chaine hydrocarbonée, linéaire ou ramifiée, comportant de 1 à 7 atomes de carbone pouvant contenir au moins un atome d'azote et/ou d'oxygène.

Parmi ces agents, ou amorceurs, monofonctionnels de polmérisation on choisit de préférence l'hydroperoxyde terbutylique ou l'acide 4-(terbutylazo)-4 - cyanovalérique.

Les agents difonctionnels de polymérisation (B2.2) servent à réaliser, par polymérisation radicalaire, des oligomères préférentiellement difonctionnels de monomère's éyléniquement insaturés dont le mode de terminaison favorise la recombinaison. Ils sont introduits en mélange avec les monomères de départ dans un solvant de l'oligomère final. Les quantités introduites sont telles que le rapport molaire des monomères sur l'agent difonctionnel de polymérisation soit compris entre 2 et $10^3$ et de préférence entre 10 et 50. Ce sont des composés symétriques de formule générale :

D - $R_7$ - E - $R_7$ - D

dans laquelle

E, $R_7$ et D sont tels que définis précédemment

Parmi ces agents, ou amorceurs, difonctionnels de polymérisation on choisit de préférence le peroxyde d'hydrogène, l'acide azobiscyanovalérique ou encore l'azobiscyanopentanol.

L'agent monofonctionnel de transfert (A2) sert à réaliser, par polymérisation radicalaire, des télomères monofonctionnels de N-vinylpyrrolidone ou de (méth)acrylate de méthyle. Il est introduit en mélange avec la N-vinylpyrrolidone ou le (méth)acrylate de méthyle, avant polymérisation, en quantité telle que le rapport molaire du monomère sur l'agent monofonctionnel de transfert soit compris entre 2 et $10^3$, et mieux entre 10 et 50.Il est habituellement choisi parmi les composés de formule générale :

X - $R_9$ - B

dans laquelle :

X est une fonction thiol SH

B est $NH_2$, OH, COCl, COOQ avec Q = H ou une chaine alkyl,

$R_9$ est une chaine hydrocarbonée, linéaire ou ramifiée, comportant de 1 à 8 atomes de carbone pouvant contenir au moins un atome d'azote et/ou d'oxygène.

Parmi ces agents monofonctionnels de transfert on choisit de préférence l'acide mercaptopropionique, le mercaptoéthanol, l'acide tioglycolique ou encore l'acide iodoacétique.

L'oligomère (B) monofonctionnel pouvant entrer dans la fabrication de l'agent de compatibilité peut être fabriqué selon tout procédé connu. Toutefois on préfère le préparer dans les conditions ci-après.

L'oligomère est obtenu par polymérisation d'un monomère, tel que défini précédemment en présence d'un agent monofonctionnel de polymérisation. Cette polymérisation, connue en elle-même, consiste à amorcer thermiquement, en milieu solvant non réactif, sous agitation et atmosphère inerte, par un agent monofonctionnel de polymérisation, la croissance des chaines polymériques qui se désactivent par réaction de terminaison. La température de réaction dépendant de la cinétique de décomposition de l'agent monofonctionnel de polymérisation peut varier de 60 à 130 °C. Le degré moyen de polymérisation ($\overline{DPn}$) suit la loi de MAYO :

$$\frac{1}{\overline{DPn}} = \left(\frac{2 \times f \times kd \times kt}{kp}\right)^{1/2} \times \left(\frac{[I]}{[M]}\right)^{1/2}$$

dans laquelle

kd est la constante de décomposition de l'agent monofonctionnel de polymérisation

kt est la constante de terminaison
kp est la constante de polymérisation
f représente l'efficacité d'amorçage
[I] est la concentration en agent monofonctionnel de polymérisation
[M] est la concentration en monomère.

Les valeurs des différentes constantes sont répertoriées dans "Polymer Handbook - Second Edition p. II-92 Ed. BRANDUP, E.H. IMMERGUT"

L'oligomère (B) difonctionnel pouvant entrer dans la fabrication de l'agent de compatibilité peut être fabriqué selon tout procédé connu. Toutefois on préfère le préparer dans les conditions ci-après.

L'oligomère est obtenu selon la technique décrite précédemment en remplaçant respectivement l'agent monofonctionnel de polymérisation ou de transfert par des agents difonctionnels de polymérisation ou de transfert.

Si le groupement hydrocarboné $R_4$ précédent contient une insaturation, il est possible de faire subir à l'oligomère difonctionnel ou monofonctionnel précédent une hydrogénation afin de rendre $R_4$ totalement saturé. Cette hydrogénation peut s'effectuer en autoclave, sous pression d'hydrogène, en présence d'un catalyseur d'hydrogénation, par exemple le nickel de Raney ou le naphténate de cobalt. La pression d'hydrogène est habituellement de 1 à 20 bars et la température de réaction comprise entre 60 et 120 °C.

Les copolymères di ou triséquencés, objets de l'invention, sont de préférence obtenus par condensation à l'état fondu de télomère monofonctionnel tel que défini précédemment avec un oligomère mono ou difonctionnel de monomère éthyléniquement insaturé.

Cette polycondensation relie, de façon covalente, le télomère et l'oligomère par des fonctions ester ou amide. Elle s'effectue à une température à laquelle le télomère et l'oligomère se trouvent à l'état fondu ou tout au moins malléable. Cette température est généralement comprise entré 200 et 300 °C. La polycondensation s'effectue également de préférence sous vide ou sous balayage de gaz inerte afin d'éliminer les produits volatils formés. Les quantités initiales de télomère et d'oligomère sont ajustées de façon à avoir des quantités sensiblement stoechiométriques de fonctions assurant la condensation. Si la condensation conduit à la formation de fonctions ester, la cinétique de réaction peut être accélérée par incorporation au mélange d'une faible quantité de catalyseur d'estérification. La qualité de séquençage s'évalue par dosage du taux de fonctions résiduelles dans les copolymères bi ou triséquencés obtenus représentant l'agent de compatibilité.

L'agent de compatibilité permet de combiner de façon homogène au moins deux polymères thermoplastiques incompatibles mais dont l'un est compatible avec le télomère constitutif de l'agent de compatibilité et l'autre est compatible avec l'oligomère constitutif de cet agent de compatibilité. L'agent de compatibilité est incorporé de façon habituelle au mélange de résines thermoplastiques, à l'état fondu, dans un appareil de malaxage. La quantité d'agent de compatibilité introduite est faible, de l'ordre de 0,1 à 5 % et mieux de 0,5 à 1 % en poids par rapport au poids de mélange de résines thermoplastiques. Cette faible quantité d'agent au mélange évite au maximum l'influence d'un tiers copolymère dans les propriétés physiques et chimiques du mélange de résines thermoplastiques devenues compatibles.

La compatibilité engendrée par l'agent selon l'invention est mise en évidence par microscopie électronique et par les propriétés mécaniques du produit résultant du mélange des polymères thermoplastiques incompatibles.

La morphologie d'un mélange de polymères thermoplastiques sans agent de compatibilité, examinée en microscopie électronique, se présente sous forme de gros nodules d'un polymère inclus dans la matrice constituée par l'autre polymère. L'adhésion entre les nodules et la matrice est inexistante. L'addition de l'agent de compatibilité provoque une diminution significative de la taille des nodules qui deviennent dans certains cas inobservables. On observe également une forte adhésion entre les phases visibles par un recouvrement des nodules par la matrice. Il se forme dans ces conditions ce qu'on peut appeler un alliage, par assimilation aux structures métallurgiques, se différenciant des mélanges.

Les propriétés mécaniques de tels alliages thermoplastiques sont sensiblement voisines, sinon supérieures, de celles des constituants, pondérés par la fraction volumique de chaque constituant, conséquence de la loi d'additivité.

Les mélanges correspondants de résines thermoplastiques incompatibles sans agent de compatibilité possèdent au contraire des propriétés mécaniques généralement proches de celles du constituant le moins performant.

A titre d'exemple, les polymères thermoplastiques compatibles avec les télomères entrant dans la composition de l'agent de compatibilité peuvent être : des polymères fluorés, tels le polyfluorure de vinylidène et le polyfluorure de vinyle ; des polymères chlorés tels que le polychlorure de vinyle et le polychlorure de vinylidène.

Dans la dénomination polymères on entend également les copolymères dans la mesure où la teneur en motifs compatibles du copolymère est suffisante pour conserver la compatibilité.

Les polymères thermoplastiques compatibles avec les oligomères entrant dans la composition de l'agent de compatibilité dépendent évidemment de la nature de l'oligomère.

A titre d'exemple on peut citer comme compatibles avec les oligomères mono et difonctionnels de styrène : les résines styréniques, tel le polystyrène.

On peut encore citer comme compatibles avec les oligomères difonctionnels de butadiène hydrogénés : le polyéthylène et les copolymères à base d'éthylène comme le copolymère éthylène-acétate de vinyle.

Grâce à l'agent de compatibilité objet de l'invention il est possible de réaliser de nouveaux alliages de résines thermoplastiques tels que à titre d'exemples : polyéthylène-polyfluorée, résine styrénique-polyfluorée, ou d'améliorer des systèmes plus connus tels que résine styréniquepolychlorure de vinyle, polyéthylène-polychlorure de vinyle, polychlorure de vinyle-copolymère éthylène-acétate de vinyle.

Sont particulièrement considérés comme nouveaux en eux-mêmes les alliages :

- Résine styrénique-polyfluoré et plus particulièrement polystyrène-polyfluorure de vinylidène
- Polyéthylène-polyfluoré et plus particulièrement polyéthylène-polyfluorure de vinylidène

Les exemples suivants illustrent l'invention sans toutefois la limiter.

EXEMPLE 1

Détermination de la constante de transfert $C_T$ de la N-vinylpyrrolidone

Dans un ballon de 100 $cm^3$, on introduit 10 g. de N-vinylpyrrolidone, 0,74 g. d'acide $\beta$-mercaptopropionique, 0,4 g. d'azobisisobutyronitrile,47,4 g. d'éthanol. Ce mélange est chauffé à 60 °C, sous agitation et balayage d'azote.

La réaction est arrêtée au temps désiré en plongeant le ballon dans de la glace. Un prélèvement du mélange est alors injecté en chromatographie phase vapeur afin de déterminer le taux de monomère résiduel par étalonnage interne à l'orthodichlorobenzène. Le reste du mélange est précipité dans de l'éther éthylique à froid, filtré et séché : le télomère ainsi obtenu est analysé en osmométrie et par dosage des fonctions acides.

Le tableau suivant donne les caractéristiques des télomères : $\overline{Mn}_{COOH}$ et $\overline{DPn}_{COOH}$ sont la masse moléculaire moyenne et le degré de polymérisation moyen du télomère déterminés par la mesure des fonctions carboxyliques terminales : $\overline{Mn}_{OSMO}$ et $\overline{DPn}_{OSMO}$ sont les mêmes grandeurs estimées par osmométrie (osmométre à tension de vapeur KNAUER).

| Temps de réaction (minutes) | Taux de conversion $\alpha$ | $\overline{Mn}_{COOH}$ | $\overline{DPn}_{COOH}$ | $\overline{Mn}_{OSMO}$ | $\overline{DPn}_{OSMO}$ |
|---|---|---|---|---|---|
| 15 | 0,28 | 1178 | 9,66 | 1119 | 9,13 |
| 38 | 0,38 | 1276 | 10,54 | 1248 | 10,29 |
| 60 | 0,43 | 1387 | 11,54 | 1286 | 10,63 |
| 120 | 0,64 | 1486 | 12,44 | 1420 | 11,84 |

Ces données permettent le calcul de la constante de transfert $C_T$ par le tracé de la fonction

$$\text{Log}\left(1 - \frac{\alpha Mo}{To \times (\overline{DPn})}\right) = f \quad \text{Log}(1 - \alpha)$$

Cette constante vaut 0,91 si $(\overline{DPn})$ est évalué par le dosage des fonctions terminales et 1,01 si $(\overline{DPn})$ est déterminé par osmétrie : le système (N-vinylpyrrolidone-acide $\beta$-mercaptopropionique) est proche de l'idéal ($C_T$ = 1), ce qui simplifie les calculs prévisionnels.

EXEMPLE 2

Un oligomère du styrène est préparé par recombinaison de macroradicaux du styrène amorcés par l'acide azobicyanovalérique. 50 g. de styrène et 7,22 g. d'acide azobicyanovalérique sont ajoutés à 300 $cm^3$

de dioxane. Le tout est porté à 98°C pendant 6 heures, sous balayage d'azote. En fin de réaction, le solvant est distillé sous vide. On obtient un oligomère de masse moléculaire égale à 1821 et de fonctionnalité moyenne de 2,4. Un télomère monohydroxylé de N-vinylpyrrolidone est obtenu par chauffage, pendant 6 heures à 60°C sous agitation et balayage d'azote, dans un ballon de 1000 $cm^3$, d'un mélange comprenant 130,8 g. de N-vinylpyrrolidone, 5,85 g. de mercaptoéthanol, 5,25 g. d'azobisisobutyronitrile et 500 $cm^3$ d'éthanol. Ce télomère est ensuite précipité dans l'éther éthylique à froid, filtré et séché ; on recueille 130,4 g. de télomère de masse moléculaire moyenne de 1665, déterminée par dosage des fonctions hydroxyles terminales. 20 g. de cet oligomère de styrène et 36,6 g. de ce télomère de N-vinylpyrrolidone sont introduits dans un tube de 200 $cm^3$. Ce mélange est porté à 190°C, sous agitation et balayage d'azote pendant 3 heures et ensuite sous vide de 130 Pa pendant 15 minutes. Cette réaction est catalysée par 0,5 $cm^3$ de tétrabutylate de zirconium.

On obtient un copolymère triséquencé polyvinylpyrrolidone-polystyrène-polyvinylpyrrolidone dont la viscosité inhérente dans le métacrésol est de 0,24 et dont les indices d'acide et d'hydroxyde sont inférieurs à 0,04 meq/g.

EXEMPLE 3

Un oligomère hydroxytéléchélique de butadiène est préparé par recombinaison de macroradicaux de butadiène amorcés par le peroxyde d'hydrogène, selon le procédé décrit dans le brevet britannique 957 788. 50 g. de l'oligomère ainsi obtenu sont hydrogénés, en solution dans 300 $cm^3$ de toluène, dans un autoclave d'un litre. L'hydrogénation est menée à 100°C, sous 12 bars d'hydrogène, et est catalysée par 2 g. de $(RuCl_2(PPh_3)_3)$.

Après trois heures de réaction, l'oligomère hydrogéné est purifié par précipitation dans l'acétone.

L'oligomère est hydrogéné à 96 % La masse moléculaire de l'oligomère hydrogéné, évaluée par osmométrie, est de 2883 et sa fonctionnalité moyenne est de 2,1.

On prépare un télomère monocarboxylique de N-vinylpyrrolidone en introduisant dans un ballon de 250 $cm^3$, 25 g. de N-vinylpyrrolidone, 1,8 g. d'acide $\beta$-mercaptopropionique, 1 g. d'azobisisobutyronitrile et 150 $cm^3$ d'éthanol. Le mélange est porté à 60°C pendant 6 heures sous agitation et balayage d'azote : il est ensuite précipité dans l'éther éthylique à froid, filtré et séché. On obtient 23 g. d'un télomère de masse moléculaire moyenne égale à 1736, déterminée par dosage des fonctions carboxyliques terminales. Dans un tube de 100 $cm^3$ on introduit 10 g. de l'oligomère hydrogéné et 6,2 g. du télomère. L'ensemble est porté à 200°C pendant 5 heures, sous agitation et sous vide de 0,5 Torr, en présence de 0,16 $cm^3$ de tétrabutylate de zirconium. On obtient un copolymère triséquencé dont les indices d'acide et d'hydroxyle indiquent un rendement d'estérification de 91 %.

EXEMPLE 4

Un mélange en poids de 49 parties de polystyrène (Lacqrene 1160 cristal de la Société ATOCHEM), de 49 parties de polyfluorure de vinylidène (FORAFLON 1000 HD de la Société ATOCHEM) et de 2 parties du copolymère triséquencé décrit dans l'exemple 2 est est porté á 200°C et malaxé dans la cuve d'un plastographe BRABENDER pendant 15 minutes. (ECHANTILLON 5).

Un mélange témoin est effectué dans les mêmes conditions sans incorporer de copolymère triséquencé (ECHANTILLON 6).

L'examen en microscopie électronique de l'échantillon 6 montre que les deux polymères sont fortement incompatibles : on distingue des nodules de 20 à 100 microns de polyfluorure de vinylidène dans la matrice de polystyrène ; de plus, lors de la fracture cryogénique, de nombreux nodules ont été évacués et l'on observe de nombreuses cavités, signe d'une mauvaise adhésion entre les nodules et la matrice.

L'examen de l'échantillon 5 indique une morphologie très fine : les nodules ont une taille inférieure au micron et on ne décèle pratiquement pas de cavités, ce qui témoigne d'une bonne adhésion interphasique.

La compatibilité est confirmée par la résistance des échantillons au solvant. Les échantillons 5 et 6 sont plongés dans du toluène, à température ambiante, sous forte agitation : après 4 heures de traitement, l'échantillon 6 a perdu 10 % de son poids tandis que l'échantillon 5 n'a perdu que 1,2 % de son poids.

EXEMPLE 5

Un mélange en poids de 49,5 parties de polyéthylène (Lacqtene 2003 SN 53 de la Société ATOCHEM), de 49,5 parties de polyfluorure de vinylidène (FORAFLON 6000 HD de la Société ATOCHEM) et de 1 partie du copolymère triséquencé décrit dans l'exemple 3 est malaxé dans la cuve d'un plastographe BRABENDER, pendant 20 minutes à 200 °C (ECHANTILLON 7).

Un mélange témoin est effectué dans les mêmes conditions sans incorporer de copolymère triséquencé (ECHANTILLON 8).

Les morphologies des échantillons 7 et 8 sont des phases continues. Après fracture cryogénique des échantillons et extraction de la phase polyéthylène à l'orthodichlorobenzène, on peut observer la finesse de la dispersion de la phase polyfluorure de vinylidène en mesurant la section des zones de fracture. Cette section a un diamètre moyen de 18 microns pour l'échantillon 8 et et de 10 microns pour l'échantillon 7.

## Revendications

**1.** Procédé de fabrication d'un agent de compatibilité caractérisé en ce qu'il est obtenu par condensation de

**(A)** un télomère monofonctionnel de N-vinylpyrrolidone ou de (méth)acrylate de méthyle produit par polymérisation radicalaire d'un mélange.

**(A1)** de N-vinylpyrrolidone ou de (méth) acrylate de méthyle avec

**(A2)** un agent monofonctionnel de transfert choisi parmi les composés de formule générale :

$X - R_9 - B$

dans laquelle :

X est une fonction thiol SH

B est $NH_2$, OH, COCl, COOQ avec Q = H ou une chaîne alkyl, linéaire ou ramifiée, contenant de 1 à 4 atomes de carbone.

$R_9$ est une chaîne hydrocarbonée, linéaire ou ramifiée, comportant de 1 à 8 atomes de carbone pouvant contenir au moins un atome d'azote et/ou d'oxygène,

avec

**(B)** un oligomère mono ou difonctionnel d'un monomère éthyléniquement insaturé étant produit par polymérisation radicalaire d'un

**(B1)** monomère éthyléniquement insaturé choisi parmi les produits de formule :

$$CH_2 = C \begin{matrix} / R_3 \\ \backslash R_4 \end{matrix}$$

dans laquelle

$R_3$ est l'hydrogène ou un groupement méthyle,

$R_4$ est :

soit un cycle aromatique contenant 6 carbones,

soit un groupement hydrocarboné aliphatique, linéaire ou ramifié, contenant de 1 à 10 carbones en présence,

**(B2)** d'un agent de polymérisation choisi parmi

**(B2.1)** un agent monofonctionnel de polymérisation choisi parmi les composés de formule générale :

$R_8 - E - R_7 - D$

dans laquelle

E est une fonction azo, peroxyde ou percarbonate,

D est un proton ou encore $NH_2$, OH, COCl, COOQ, avec Q = H ou une chaîne alkyle linéaire ou ramifiée, contenant de 1 à 4 carbones,

$R_7$ est soit une chaîne hydrocarbonée, linéaire ou ramifiée, comportant de 1 à 7 atomes de carbone pouvant contenir au moins un atome d'azote et/ou d'oxygène soit absent, et

$R_8$ est une chaîne hydrocarbonée, linéaire ou ramifiée, comportant de 1 à 7 atomes de carbone pouvant contenir au moins un atome d'azote et/ou d'oxygène,

**(B2.2)** un agent difonctionnel de polymérisation de formule générale :

$D - R_7 - E - R_7 - D$

dans laquelle
E, $R_7$ et D sont tels que définis précédemment.

2. Procédé selon la revendication 1 caractérisé en ce que la condensation s'effectue par mélange du télomère et de l'oligomère, rendus malléables par la chaleur, en quantités sensiblement stoechiométriques des fonctions assurant la condensation.

3. Produit susceptible d'être obtenu par le procédé selon la revendication 1.

4. Alliage d'au moins deux polymères thermoplastiques incompatibles rendus compatibles par ajout d'au plus 5 % en poids par rapport au poids du mélange des polymères thermoplastiques d'un composé de la revendication 3 dont le télomère constitutif est compatible avec l'un au moins des polymères thermoplastiques et dont l'oligomère constitutif est compatible avec au moins un autre des polymères thermoplastiques de l'alliage.

5. Alliage selon la revendication 4 caractérisé en ce qu'il est essentiellement constitué de l'association du couple de résine thermoplastique : polyéthylène -polyfluorée, styrénique-polyfluorée, styrénique-polychlorure de vinyle, polyéthylène-polychlorure de vinyle, polychlorure de vinyle-copolymère éthylène-acétate de vinyle.

6. Alliage selon la revendication 5 choisi dans le couple :
Polystyrène - polyfluorure de vinylidène.
Polyéthylène - polyfluorure de vinylidène.

7. Alliage selon l'une des revendications 4 à 6 caractérisé en ce qu'il contient de 0,1 à 0,5 % en poids de l'agent de compatibilité de la Revendication 3.

## Claims

1. Process for the manufacture of a compatibility agent, characterized in that it is obtained by condensation of
**(A)** a monofunctional N-vinylpyrrolidone or methyl (meth)acrylate telomer produced by free-radical polymerization of a mixture
**(A1)** of N-vinylpyrrolidone or of methyl (meth)acrylate with
**(A2)** a monofunctional transfer agent chosen from the compounds of general formula:

$X - R_9 - B$

in which:
X is a thiol functional group SH
B is $NH_2$, OH, COCl or COOQ with Q = H or a linear or branched alkyl chain containing from 1 to 4 carbon atoms
$R_9$ is a linear or branched hydrocarbon chain comprising from 1 to 8 carbon atoms which can contain at least one nitrogen and/or oxygen atom,
with
**(B)** a mono- or difunctional oligomer of an ethylenically unsaturated monomer, being produced by free-radical polymerization of a

**(B1)** ethylenically unsaturated monomer chosen from the products of formula:

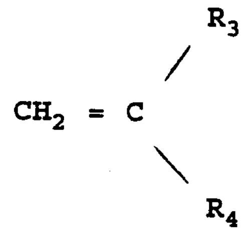

in which
$R_3$ is hydrogen or a methyl group,
$R_4$ is:
either an aromatic ring containing 6 carbons,
or a linear or branched aliphatic hydrocarbon group containing from 1 to 10 carbons
in the presence
**(B2)** of a polymerization agent chosen from
**(B2.1)** a monofunctional polymerization agent chosen from the compounds of general formula:

$R_8$-E-$R_7$-D

in which
E is an azo, peroxide or percarbonate functional group,
D is a proton or alternatively $NH_2$, OH, COCl or COOQ with Q = H or a linear or branched alkyl chain containing from 1 to 4 carbons,
$R_7$ is either a linear or branched hydrocarbon chain comprising from 1 to 7 carbon atoms which can contain at least one nitrogen and/or oxygen atom or is either absent, and
$R_8$ is a linear or branched hydrocarbon chain comprising from 1 to 7 carbon atoms which can contain at least one nitrogen and/or oxygen atom,
**(B2.2)** a difunctional polymerization agent of general formula:

D-$R_7$-E-$R_7$-D

in which
E, $R_7$ and D are as defined above.

**2.** Process according to Claim 1, characterized in that the condensation is carried out by mixing the telomer and oligomer, made malleable by heat, in substantially stoichiometric amounts of the functional groups which provide the condensation.

**3.** Product capable of being obtained by the process according to Claim 1.

**4.** Alloy of at least two incompatible thermoplastic polymers which are made compatible by addition of at most 5% by weight, with respect to the weight of the mixture of the thermoplastic polymers, of a compound of Claim 3 whose constituent telomer is compatible with at least one of the thermoplastic polymers and whose constituent oligomer is compatible with at least one other of the thermoplastic polymers of the alloy.

**5.** Alloy according to Claim 4, characterized in that it consists essentially of the combination of the thermoplastic resin pair: polyethylene/polyfluorinated, styrene/polyfluorinated, styrene/poly (vinyl chloride), polyethylene/poly(vinyl chloride) or poly(vinyl chloride)/ethylene-vinyl acetate copolymer.

**6.** Alloy according to Claim 5, chosen from the pair:
Polystyrene/poly(vinylidene fluoride)
Polyethylene/poly (vinylidene fluoride).

7. Alloy according to one of Claims 4 to 6, characterized in that it contains from 0.1 to 0.5% by weight of the compatibility agent of Claim 3.

**Patentansprüche**

1. Verfahren zur Herstellung eines Kompatibilisierungsmittels, dadurch gekennzeichnet, daß es gewonnen wird durch Kondensation von:

**(A)** einem monofunktionellen Telomer aus N-Vinylpyrrolidon oder Methyl(meth)acrylat, das hergestellt wird durch radikalische Polymerisation eines Gemisches

**(A1)** aus N-Vinylpyrrolidon oder Methyl(meth)acrylat mit

**(A2)** einem monofunktionellen Transfermittel, ausgewählt aus den Verbindungen der allgemeinen Formel:

$X - R_9 - B$

in der:

X eine Thiolgruppe SH

B $NH_2$, OH, COCl, COOQ ist, wobei Q Wasserstoff oder eine lineare oder verzweigte Alkylgruppe mit 1 bis 4 Kohlenstoffatomen ist;

$R_9$ ist eine lineare oder verzweigte Kohlenwasserstoffgruppe mit 1 bis 8 Kohlenstoffatomen, die mindestens ein Stickstoff- und/oder Sauerstoffatom enthalten kann,

mit

**(B)** einem mono- oder difunktionellen Oligomer eines ethylenisch ungesättigten Monomers, hergestellt durch radikalische Polymerisation eines

**(B1)** ethylenisch ungesättigten Monomers, ausgewählt aus den Produkten der Formel:

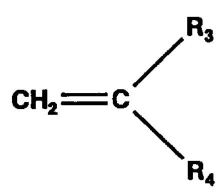

in der

$R_3$ Wasserstoff oder eine Methylgruppe ist;

$R_4$ ist:

entweder ein aromatischer Ring mit 6 Kohlenstoffatomen, oder eine lineare oder verzweigte aliphatische Kohlenwasserstoffgruppe mit 1 bis 10 Kohlenstoffatomen,

in Gegenwart von

**(B2)** einem Polymerisationsmittel, ausgewählt aus

**(B2.1)** einem monofunktionellen Polymerisationsmittel, ausgewählt aus den Verbindungen der allgemeinen Formel:

$R_8 - E - R_7 - 7 - D$

in der

E eine Azo-, Peroxy- oder Percarbonatgruppe ist,

D ein Proton oder auch $NH_2$ OH, COCl, COOQ ist, wobei Q Wasserstoff oder eine lineare oder verzweigte Alkylgruppe mit 1 bis 4 Kohlenstoffatomen ist,

$R_7$ entweder eine lineare oder verzweigte Kohlenwasserstoffgruppe mit 1 bis 7 Kohlenstoffatomen ist, die wenigstens ein Stickstoff und/oder Sauerstoffatom enthalten kann, oder nicht vorhanden ist, und

$R_8$ eine lineare oder verzweigte Kohlenwasserstoffgruppe mit 1 bis 7 Kohlenstoffatomen ist, die wenigstens ein Stickstoff- und/oder Sauerstoffatom enthalten kann,

**(B2.2)** einem difunktionellen Polymerisationsmittel der allgemeinen Formel:

$D - R_7 - E - R_7 - D$,

in der
E, $R_7$ und D wie vorstehend definiert sind.

**2.** Verfahren nach Anspruch 1, dadurch gekennzeichnet, daß die Kondensation durch Mischung des durch Erhitzen verformbaren Telomers und Oligomers in genau stöchiometrischen Mengen der die Kondensation sicherstellenden Gruppen durchgeführt wird.

**3.** Produkt, das durch das Verfahren nach Anspruch 1 gewonnen werden kann.

**4.** Mischung aus mindestens zwei inkompatiblen thermoplastischen Polymeren, die kompatibilisiert wird durch Zugabe von höchstens 5 Gew.%, bezogen auf das Gewicht der thermoplastischen Polymermischung einer Verbindung nach Anspruch 3, deren Telomer-Bestandteil mit wenigstens einem der thermoplastischen Polymere kompatibel ist und deren Oligomer-Bestandteil mit wenigstens einem anderen thermoplastischen Polymer der Mischung kompatibel ist.

**5.** Mischung nach Anspruch 4, dadurch gekennzeichnet, daß sie im wesentlichen aus der Verknüpfung der folgenden Thermoplastpaare besteht: polyfluoriertes Polyethylen, polyfluoriertes Styrol, Styrol-Polyvinylchlorid, Polyethylen-Polyvinylchlorid, Polyvinylchlorid-Ethylen-Vinylacetatcopolymer.

**6.** Mischung nach Anspruch 5, ausgewählt aus den Paaren:
Polystyrol-Polyvinylidenfluorid
Polyethylen-Polyvinylidenfluorid.

**7.** Mischung nach einem der Ansprüche 4 bis 6, dadurch gekennzeichnet, daß sie 0,1 bis 0,5 Gew.% des Kompatibilisierungsmittels nach Anspruch 3 enthält.